# FASCICULE DE BREVET EUROPEEN

(11) **EP 3 184 008 B1**
(45) Date de publication et mention de la délivrance du brevet: **06.03.2019**
(21) Numéro de dépôt: 16206008.1
(22) Date de dépôt: 21.12.2016
(51) Int. Cl.: A47J 27/08, A47J 27/09

(54) **APPAREIL DE CUISSON SOUS PRESSION À SÉCURITÉ AMÉLIORÉE**
DRUCKKOCHGERÄT MIT VERBESSERTER SICHERHEIT
PRESSURE-COOKING DEVICE WITH IMPROVED SAFETY

(30) Priorité: 23.12.2015 FR 1563219
(43) Date de publication de la demande: 28.06.2017
(73) Titulaire: SEB S.A., 69130 Ecully (FR)
(72) Inventeur: CHAMEROY, Eric, 21260 Véronnes (FR); BARAILLE, Eric, Laurent, 21121 Fontaine-lès-Dijon (FR)
(74) Mandataire: Weber, Jean-François

(56) Documents cités:
- EP-A1- 2 732 734
- WO-A1-2012/045979
- CN-U- 201 624 512
- FR-A1- 2 783 687

## Description

La présente invention se rapporte au domaine technique général des appareils de cuisson sous pression, et en particulier des appareils domestiques du genre autocuiseurs, comprenant une cuve et un couvercle destiné à être verrouillé sur la cuve pour former une enceinte de cuisson sensiblement étanche, lesdits appareils étant destinés à assurer la cuisson sous pression de vapeur d'aliments contenus dans la cuve.

La présente invention concerne plus particulièrement un appareil de cuisson d'aliments sous pression comprenant :
- une cuve et un couvercle qui peut être verrouillé et déverrouillé relativement à la cuve,
- un moyen de sécurité susceptible d'occuper une position active dans laquelle il empêche le déverrouillage du couvercle,
- un organe de commande manuelle du verrouillage et déverrouillage du couvercle, ledit organe de commande manuelle étant mobile entre une première et une deuxième position et conçu pour que, lorsque le moyen de sécurité n'occupe pas sa position active, le passage dudit organe de commande manuelle de sa première à sa deuxième position entraîne le déverrouillage du couvercle,
- un moyen d'embrayage/débrayage autorisant, lorsque le moyen de sécurité occupe sa position active, l'organe de commande manuelle à passer de sa première à sa deuxième position sans entraîner le déverrouillage du couvercle.

On connaît déjà des appareils de cuisson sous pression comprenant une cuve et un couvercle destiné à être verrouillé sur la cuve par l'intermédiaire d'un mécanisme de verrouillage/déverrouillage susceptible d'évoluer entre une configuration de verrouillage du couvercle et une configuration de déverrouillage. Un tel mécanisme de verrouillage/déverrouillage met par exemple en oeuvre une pluralité de mâchoires de verrouillage solidaires de bras entraîneurs disposés radialement sur le couvercle et dont le déplacement est commandé par un organe de commande manuelle monté sur le couvercle entre une première position correspondant au verrouillage et une deuxième position correspondant au déverrouillage. L'utilisateur peut ainsi actionner à la main l'organe de commande pour assurer le déplacement des mâchoires afin de verrouiller ou déverrouiller le couvercle. Le mécanisme de verrouillage/déverrouillage de ces appareils connus met en oeuvre une chaîne cinématique généralement susceptible de procurer une démultiplication de l'effort exercé par l'utilisateur sur l'organe de commande, afin de faciliter la tâche de l'utilisateur.

Il est par ailleurs connu d'équiper de tels appareils de cuisson sous pression d'une tige manométrique de sécurité montée à coulissement sur le couvercle entre une position basse et une position haute dans laquelle elle interagit avec l'organe de commande afin d'empêcher tout déplacement de ce dernier vers sa position de déverrouillage. La tige manométrique de sécurité des autocuiseurs connus bloque ainsi mécaniquement l'organe de commande dans sa première position tant que le niveau de pression n'est pas redescendu à un niveau acceptable pour la sécurité de l'utilisateur. Rien n'empêche toutefois un utilisateur de tenter d'ouvrir de force l'autocuiseur, en exerçant, par inconscience, ignorance ou inadvertance, un effort qui peut être très important sur l'organe de commande du fait de la démultiplication évoquée ci-avant, alors que le déplacement de l'organe de commande est bloqué par la tige de sécurité en position haute. Un tel effort intempestif et excessif pourrait conduire à la casse de pièces formant le mécanisme de verrouillage/déverrouillage ou à celle de la tige manométrique de sécurité elle-même, et à une ouverture intempestive de l'appareil accompagné d'un échappement brutal du couvercle dangereux pour l'utilisateur.

Afin de prévenir un tel risque, il a été proposé de surdimensionner les pièces formant l'organe de commande, le mécanisme de transmission et le moyen de sécurité à l'ouverture, voire même de recourir à des matériaux métalliques pour fabriquer certaines de ces pièces, alors qu'une matière plastique conviendrait par ailleurs parfaitement. Cela complique donc la conception des autocuiseurs de l'art antérieur, et en augmente le coût de fabrication ainsi que le poids. De plus, en dépit de toutes ces précautions de conception, il subsiste toujours un risque, certes marginal mais pas inexistant, que l'utilisateur puisse provoquer malgré tout la casse d'une pièce en exerçant un effort excessif d'ouverture sur l'organe de commande, alors que ce dernier est bloqué dans sa première position par la tige de sécurité. Le document WO2012/045979 A1 divulgue un appareil de cuisson.

C'est pourquoi il a été proposé un autocuiseur à mâchoires pourvu d'un organe de commande rotatif débrayable, de façon que lorsque la tige de sécurité occupe sa position haute, l'organe de commande puisse passer de sa position de verrouillage à sa position de déverrouillage sans entraîner le déverrouillage du couvercle. La conception de l'organe de commande débrayable en question repose sur la mise en oeuvre de ressorts de compression qui font partie de la liaison cinématique entre l'organe de commande et les mâchoires. Lorsque la tige de sécurité est en position basse, la rotation de l'organe de commande dans le sens du déverrouillage entraîne en déplacement les ressorts de compression, qui ne se déforment pas (car leur raideur est suffisamment importante) et se comportent comme des organes de transmission d'effort rigides. Si toutefois l'utilisateur tentait de déverrouiller le couvercle alors que la pression régnant dans l'appareil est encore trop élevée, de sorte que la tige de sécurité est en position haute, alors l'utilisateur parviendrait à amener l'organe de commande dans sa position de déverrouillage en comprimant les ressorts de compression, au prix toutefois d'un effort manuel significatif. Grâce à cette conception, le risque de voir des pièces du mécanisme se briser sous l'effet d'un effort intempestif de déverrouillage exercé par l'utilisateur est réduit.

Cette conception améliorée présente toutefois différents inconvénients. En particulier, les ressorts de compression exercent sur l'organe de commande, lorsque ce dernier est en position de déverrouillage et que la tige de sécurité est en position haute, un puissant effort de retour sur l'organe de commande. Cet effort de retour peut surprendre l'utilisateur, qui pourrait même se faire pincer les doigts entre l'organe de commande et le couvercle. En outre, un effort permanent est exercé sur le mécanisme et la tige de verrouillage, avec tous les inconvénients et risques éventuels que cela entraîne.

Afin de remédier à ces inconvénients, il a été proposé une conception alternative selon laquelle le débrayage ne s'effectue pas par compression de ressorts s'opposant au déplacement de l'organe de commande dans le sens du déverrouillage, mais au moyen d'un dispositif de débrayage intégré à l'axe de rotation de l'organe de commande. Le dispositif de débrayage en question est constitué d'une came d'entraînement en liaison pivot avec l'axe, d'un disque de débrayage en liaison glissière avec l'axe accouplé à cette came par l'intermédiaire de dents d'entraînements. Ce disque est maintenu en appui radial sur la came d'entraînement par l'intermédiaire d'un ressort et d'une rondelle de blocage verrouillée sur l'axe. Si l'utilisateur tente de déverrouiller le couvercle alors que la tige de sécurité est en position haute, le disque de débrayage entraîné par l'organe de commande et en appui sur les dents de la came, recule sur l'axe de l'organe de commande en comprimant le ressort. Une fois le disque de débrayage désaccouplé de la came, la liaison de commande entre les mâchoires et l'organe de commande est rompue, et il n'y a plus d'effort exercé sur le mécanisme (aux forces de frottement près) de sorte que l'organe de commande est libre sur son axe.

Ce perfectionnement s'avère être toutefois de construction relativement complexe, et nécessitant sur et autour de l'axe de rotation un espace libre qu'il peut être difficile de dégager dans certaines conceptions de mécanisme de verrouillage/déverrouillage. De ce fait, certaines conceptions de mécanisme de verrouillage/déverrouillage ne sont pas compatibles avec ce perfectionnement en matière de débrayage, qui impose en outre nécessairement la mise en oeuvre d'un organe de commande rotatif selon un axe horizontal.

Les objets assignés à l'invention visent par conséquent à porter remède aux différents inconvénients énumérés précédemment et à proposer un nouvel appareil de cuisson d'aliments sous pression pourvu d'une fonction de débrayage mise en oeuvre par des moyens particulièrement compacts, fiables et bon marché, et dont la conception se prête à une multitude de variantes différentes, notamment en ce qui concerne la nature et le mode de déplacement de l'organe de commande du verrouillage/déverrouillage.

Un autre objet de l'invention vise à proposer un nouvel appareil de cuisson d'aliments sous pression de construction particulièrement simple et légère.

Un autre objet de l'invention vise à proposer un nouvel appareil de cuisson d'aliments sous pression dont la conception autorise une démultiplication importante de l'effort que doit exercer l'utilisateur pour verrouiller et/ou déverrouiller le couvercle, sans pour autant dégrader la fiabilité, la sécurité, le poids et le coût de revient de l'appareil.

Un autre objet de l'invention vise à proposer un nouvel appareil de cuisson d'aliments sous pression dont la construction, tout en étant particulièrement simple, fait sensiblement disparaître tout risque de rupture d'une pièce par suite d'une mauvaise manipulation d'ouverture de l'utilisateur.

Un autre objet de l'invention vise à proposer un nouvel appareil de cuisson d'aliments sous pression de conception particulièrement robuste.

Un autre objet de l'invention vise à proposer un nouvel appareil de cuisson d'aliments sous pression qui nécessite un effort réduit de déverrouillage.

Un autre objet de l'invention vise à proposer un nouvel appareil de cuisson d'aliments sous pression dont la fiabilité et la sécurité d'utilisation sont optimisées.

Les objets assignés à l'invention sont atteints à l'aide d'un appareil de cuisson d'aliments sous pression comprenant :
- une cuve et un couvercle qui peut être verrouillé et déverrouillé relativement à la cuve,
- un moyen de sécurité susceptible d'occuper une position active dans laquelle il empêche le déverrouillage du couvercle,
- un organe de commande manuelle du verrouillage et déverrouillage du couvercle, ledit organe de commande manuelle étant mobile entre une première et une deuxième position et conçu pour que, lorsque le moyen de sécurité n'occupe pas sa position active, le passage dudit organe de commande manuelle de sa première à sa deuxième position entraîne le déverrouillage du couvercle,
- un moyen d'embrayage/débrayage autorisant, lorsque le moyen de sécurité occupe sa position active, l'organe de commande manuelle à passer de sa première à sa deuxième position sans entraîner le déverrouillage du couvercle,
caractérisé en ce que le moyen d'embrayage/débrayage comprend au moins une pièce motrice mobile selon une première trajectoire inscrite dans un premier plan et une pièce réceptrice mobile selon une deuxième trajectoire inscrite dans un deuxième plan, lesdits premier et deuxième plans étant parallèles et situés l'un au-dessus de l'autre, ledit moyen d'embrayage/débrayage comprenant également un connecteur mobile qui assure l'accouplement lesdites pièces motrice et réceptrice de façon à les immobiliser l'une par rapport à l'autre pour qu'elle forme ainsi un sous-ensemble mobile relativement au couvercle, ledit moyen d'embrayage/débrayage étant configuré pour désaccoupler lesdites pièces motrice et réceptrice par déplacement dudit connecteur mobile selon une direction sécante à ladite première trajectoire, en réponse à l'exercice d'un effort d'entraînement de l'organe de commande manuelle de sa première vers sa deuxième position alors que le moyen de sécurité occupe sa position active, afin de permettre un déplacement relatif desdites pièces motrice et réceptrice ainsi désaccouplées.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue générale en perspective, un appareil de cuisson d'aliments sous pression conforme à l'invention avec son organe de commande dans sa deuxième position, laquelle correspond en l'espèce au déverrouillage du couvercle relativement à la cuve.
- Les figures 2 à 4 illustrent différents détails de réalisation de l'appareil de la figure 1 en configuration de déverrouillage.
- La figure 5 illustre, selon une vue générale en perspective, un détail de réalisation correspondant à la coopération des pièces motrice et réceptrice ainsi que du connecteur mobile de l'appareil de cuisson des figures précédentes en configuration de déverrouillage.
- La figure 6 est une vue partielle en coupe du détail de réalisation de la figure 5.
- La figure 7 correspond à la figure 2 à ceci près que l'organe de commande se trouve dans sa première position, correspondant en l'espèce au verrouillage du couvercle relativement à la cuve.
- La figure 8 illustre, selon une vue en perspective, un détail de réalisation de l'organe de commande du verrouillage/déverrouillage alors que ce dernier occupe sa deuxième position, que le moyen de sécurité occupe sa position active et que le connecteur mobile est rétracté de sorte que les pièces motrice et réceptrice sont désaccouplées (configuration déverrouillée et débrayée).
- Les figures 9 et 10 sont des vues partielles en coupe de détails de réalisation de l'appareil de la figure 8 en configuration déverrouillée et débrayée.

L'appareil 1 de cuisson d'aliments sous pression conforme à l'invention est destiné à assurer la cuisson de différents aliments à un niveau de pression supérieur à la pression atmosphérique, de préférence dans un contexte domestique. L'appareil 1 conforme à l'invention est donc avantageusement un autocuiseur présentant un caractère portatif (c'est-à-dire qu'il peut être déplacé manuellement) et indépendant. De façon classique, l'appareil 1 de cuisson sous pression conforme à l'invention comprend une cuve 2 formant récipient de cuisson et présentant avantageusement sensiblement une symétrie de révolution selon un axe X-X' qui s'étend selon une direction s'apparentant à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A, à partir et à la périphérie duquel s'élève une paroi latérale 2B qui se termine par un bord supérieur libre délimitant une ouverture d'accès à l'intérieur de la cuve 2. Avantageusement, l'appareil de cuisson 1 comprend au moins une poignée de cuve 2C qui est fixée à ladite cuve 2, de façon à faire saillie extérieurement de cette dernière. De préférence, ladite poignée de cuve 2C est monté sur la face externe de la paroi latérale 2B de la cuve 2, de façon à s'étendre radialement vers l'extérieur de la cuve 2. Dans le mode de réalisation illustré aux figures, l'appareil de cuisson 1 comprend deux poignées identiques 2C, 2D fixées sur la paroi latérale 2B de la cuve 2 de façon diamétralement opposée par rapport à l'axe central X-X'.

L'appareil 1 conforme à l'invention comprend également un couvercle 3 destiné à être associé à la cuve 2 pour former avec cette dernière une enceinte de cuisson sensiblement étanche, c'est-à-dire suffisamment hermétique pour permettre une montée en pression de l'appareil 1. Le couvercle 3 est avantageusement de forme générale discoïde, et peut être verrouillé (pour permettre la montée en pression de l'enceinte, un joint d'étanchéité étant interposé entre le couvercle 3 et la cuve 2) et déverrouillé (pour accéder à l'intérieur de la cuve 2) relativement à la cuve 2, par tout moyen approprié (par exemple: verrouillage à baïonnette comme dans la variante illustrée aux figures, ou à mâchoires, ou à segments, etc.).

L'appareil 1 de cuisson d'aliments sous pression conforme à l'invention comprend par ailleurs avantageusement un moyen de régulation de pression 5 (telle qu'une soupape à poids ou à ressort) monté en communication étanche avec un perçage correspondant ménagé dans le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement, et par exemple comprise dans une plage s'étendant sensiblement entre 10 et 120 kPa, de préférence de l'ordre de 100 kPa.

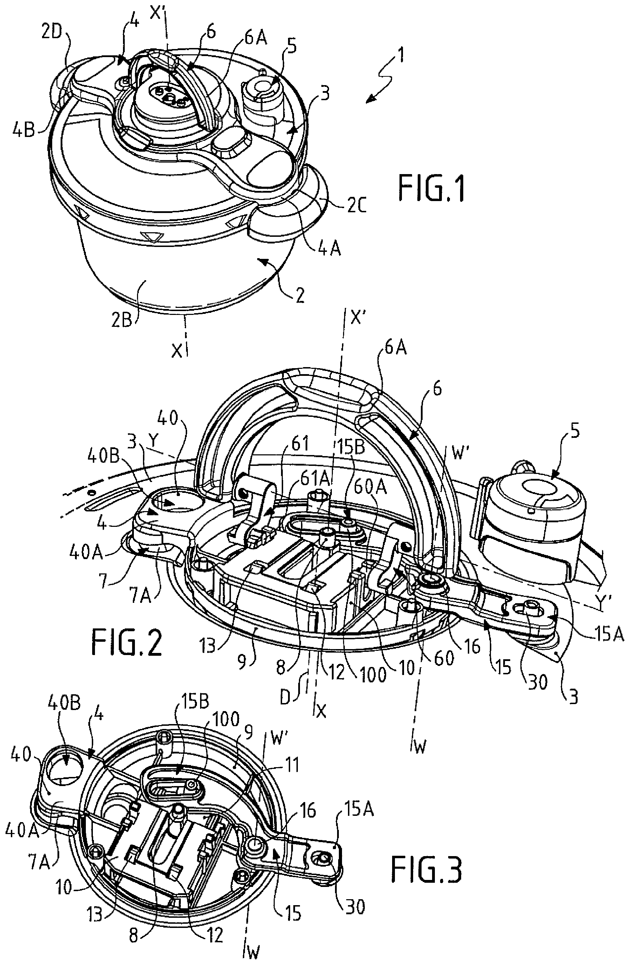

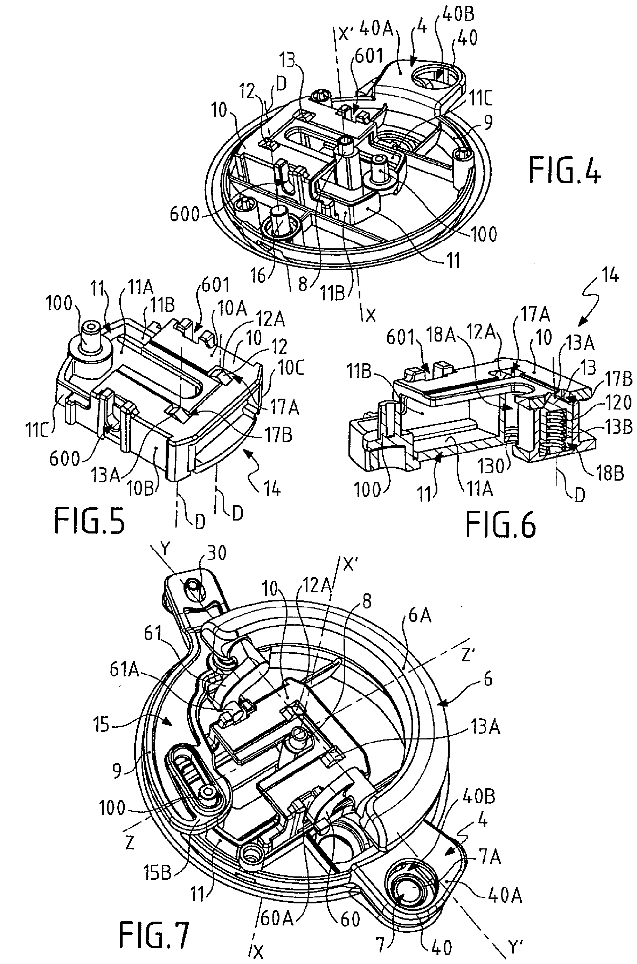

L'appareil 1 comprend également un organe de commande manuelle 6 du verrouillage et déverrouillage du couvercle 3 relativement à la cuve 2. L'organe de commande 6 est avantageusement conçu pour être manipulé, de préférence directement, par l'utilisateur, de façon à permettre à ce dernier de contrôler à la main le verrouillage/déverrouillage du couvercle 3 relativement à la cuve 2. A cette fin, l'organe de commande manuelle 6 du verrouillage/déverrouillage du couvercle 3 relativement à la cuve 2 est mobile entre une première position (illustrée à la figure 7) et une deuxième position (illustrée aux figures 1, 2, 8 et 9). Dans l'exemple illustré aux figures, ledit organe de commande manuelle 6 est monté mobile à rotation sur le couvercle 3 entre lesdites première et deuxième positions. De façon préférentielle, ledit organe de commande manuelle 6 est monté mobile à rotation selon un axe Y-Y' qui s'étend sensiblement perpendiculairement à l'axe vertical central X-X', et qui est de préférence sécant à ce dernier. L'axe Y-Y' s'étend ainsi de façon sensiblement horizontale. Bien entendu, l'invention n'est absolument pas limitée à un organe de commande manuelle rotatif, et il est par exemple tout à fait envisageable que ledit organe de commande manuelle 6 soit par exemple monté à coulissement dans un plan horizontal et/ou vertical relativement au couvercle 3. De préférence, l'organe de commande manuelle 6 est monté mobile à rotation entre une position rétractée, qui correspond à la première position, et dans laquelle l'organe de commande manuelle 6 est rabattue sur le couvercle 3, et une position déployée, correspondant à la deuxième position, dans laquelle l'organe de commande manuelle 6 fait saillie verticalement du couvercle 3. L'organe de commande manuelle 6 est dans ce cas avantageusement conçu pour parcourir une course angulaire prédéterminée, par exemple d'environ 90°, entre la première position et la deuxième position. L'organe de commande manuelle 6 peut par ailleurs prendre toute forme appropriée, et être par exemple formé par un levier, une anse ou un bouton. Dans l'exemple illustré aux figures, l'organe de commande manuelle 6 est avantageusement formé par une anse 6A, qui présente de préférence une forme sensiblement hémicirculaire afin de servir à la fois d'organe de commande manuelle du verrouillage/déverrouillage et de poignée de préhension pour soulever et manipuler le couvercle 3 par son intermédiaire.

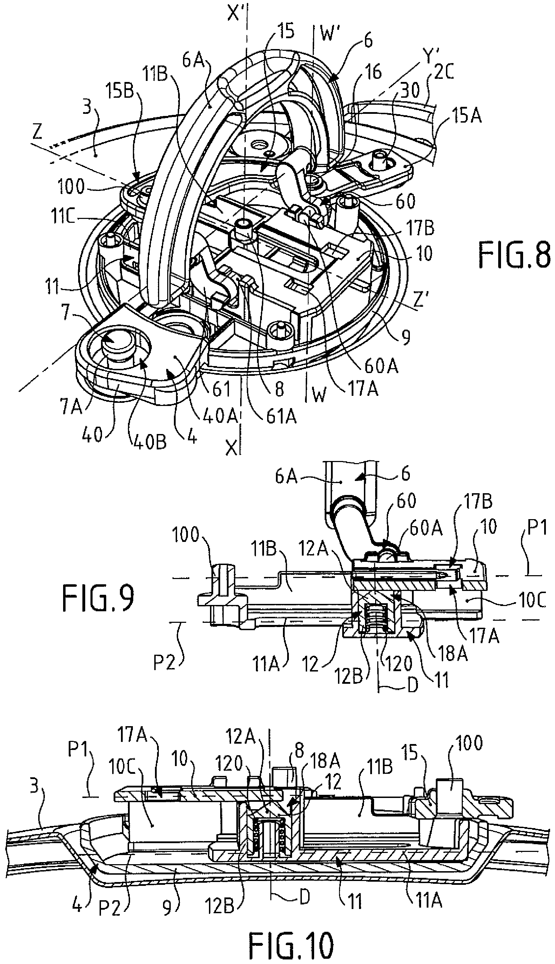

Comme illustré aux figures, l'appareil 1 de cuisson d'aliments sous pression comprend par ailleurs un moyen de sécurité 7, destiné à prévenir tout déverrouillage intempestif du couvercle 3 susceptible d'engendrer un risque pour l'utilisateur. Le moyen de sécurité 7 forme ainsi avantageusement un moyen de sécurité à l'ouverture, c'est-à-dire un moyen conçu pour autoriser le déverrouillage du couvercle 3 relativement à la cuve 2 uniquement lorsque le niveau de pression et/ou de température régnant dans l'enceinte de cuisson formée par la cuve 2 et le couvercle 3 atteint un niveau acceptable du point de vue de la sécurité de l'utilisateur, de manière à prévenir tout risque d'échappement brutal du couvercle et/ou de projections brûlantes de vapeur ou d'aliments. Le moyen de sécurité 7 est susceptible d'occuper une position active (visible notamment à la figure 8) dans laquelle il empêche le déverrouillage du couvercle 3. De préférence, le moyen de sécurité 7 est conçu pour répondre au niveau de pression régnant dans l'enceinte formée par la cuve 2 et le couvercle 3, c'est à dire que le moyen de sécurité 7 est sensible à la pression. Dans le cas illustré aux figures, la position instantanée du moyen de sécurité à l'ouverture 7 dépend du niveau de pression régnant dans l'enceinte, de sorte que le moyen de sécurité à l'ouverture 7 occupe sa position active lorsque la pression dans l'enceinte excède un niveau prédéterminé de sécurité compris par exemple dans une plage s'étendant entre 1 et 4 kPa au-dessus de la pression atmosphérique. De préférence, et conformément au mode de réalisation illustré aux figures, le moyen de sécurité à l'ouverture 7 est mobile, sous l'effet de la pression régnant dans l'enceinte, entre sa position active (qui est avantageusement une position haute de butée) dans laquelle il empêche le déverrouillage du couvercle 3 et une position inactive, qui forme avantageusement une position basse de butée dans laquelle le moyen de sécurité à l'ouverture 7 autorise le déverrouillage du couvercle 3 relativement à la cuve 2. De préférence, le moyen de sécurité à l'ouverture 7 comprend un doigt de sécurité 7A monté à coulissement vertical, selon un axe de coulissement sensiblement parallèle à l'axe vertical X-X', relativement au couvercle 3, entre une position haute correspondant à la position active et une position basse de rappel (par exemple sous l'effet du poids du doigt 7A ou d'une force de rappel extérieure, exercée par exemple par un ressort). Ledit doigt de sécurité 7A est avantageusement conçu pour être maintenu en position haute lorsque la pression régnant au sein de l'appareil 1 atteint (ou excède) un niveau prédéterminé, et de préférence pour retomber dans sa position basse dès que le niveau de pression chute au-dessous du niveau de sécurité prédéterminé. Le doigt de sécurité 7A est par exemple monté en communication étanche avec un orifice correspondant ménagé à travers le couvercle 3, de façon à ce que la pression régnant dans l'enceinte formée par la cuve 2 et le couvercle 3 vienne exercer un effort de poussée verticale sur le doigt de sécurité 7A et le maintienne dans sa position active dès que le niveau de pression dans l'enceinte excède le niveau prédéterminé de sécurité susvisé. L'organe de commande manuelle 6 est par ailleurs conçu pour que, lorsque le moyen de sécurité 7 n'occupe pas sa position active, le passage dudit organe de commande manuelle 6 de sa première à sa deuxième position entraîne le déverrouillage du couvercle 3. En d'autres termes, le moyen de sécurité 7 autorise, lorsqu'il n'occupe pas sa position active (et qu'il se trouve par exemple dans sa position basse inactive illustrée notamment à la figure 7), l'utilisateur à déverrouiller le couvercle 3 par déplacement manuel de l'organe de commande 6 de sa première vers sa deuxième position.

Avantageusement, l'appareil 1 comprend un mécanisme de verrouillage/déverrouillage du couvercle 3 relativement à la cuve 2, ledit mécanisme de verrouillage/déverrouillage étant relié fonctionnellement à l'organe de commande manuelle 6 par l'intermédiaire d'un dispositif de liaison cinématique. Dans le mode de réalisation illustré aux figures, le mécanisme de verrouillage/déverrouillage comprend un système à baïonnette conçu pour assurer le verrouillage et le déverrouillage du couvercle 3 relativement à la cuve 2, par pivotement du couvercle 3 relativement à la cuve 2, par exemple selon ledit axe vertical central X-X', pour faire ainsi passer l'appareil 1 d'une configuration d'attente de verrouillage, dans laquelle le couvercle 3 est rapporté sur la cuve 2 et repose librement sur cette dernière (figure 1 à 6), à une configuration de verrouillage dans laquelle la cuve 2 et le couvercle 3 interagissent pour empêcher leur libre séparation, et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée autour de l'axe central X-X', en l'espèce dans un sens horaire, et passe de sa configuration de verrouillage à sa configuration d'attente de verrouillage par rotation du couvercle 3 relativement à la cuve 2 selon ladite course angulaire prédéterminée autour de l'axe central X-X' dans un sens antihoraire opposé. Le système à baïonnette comprend avantageusement à cet effet des rampes de couvercle et de cuve qui sont solidaires respectivement du couvercle 3 et de la cuve 2 et qui sont conçus, afin d'assurer le verrouillage et le déverrouillage du couvercle 3 relativement à la cuve 2, pour venir s'engager, respectivement se dégager, mutuellement par rotation du couvercle 3 relativement à la cuve 2 autour de l'axe vertical central X-X' selon ladite course angulaire prédéterminée. Comme cela est bien connu en tant que tel, les rampes de cuve et de couvercle sont destinées à coopérer deux à deux, c'est-à-dire que chaque rampe de couvercle est amenée, par rotation du couvercle 3 relativement à la cuve 2, à passer sous une rampe de cuve correspondante pour verrouiller le couvercle 3 relativement à la cuve 2.

Dans le mode de réalisation illustré aux figures, le dispositif de liaison cinématique précité permet ainsi à un utilisateur de commander la rotation du couvercle 3. À cet effet, le mécanisme de verrouillage/déverrouillage comprend également un support 4 auquel ledit couvercle 3 est attaché, par exemple par l'intermédiaire d'une liaison pivot d'axe X-X', ledit dispositif de liaison cinématique étant conçu pour transformer le déplacement de l'organe de commande manuelle 6 entre ses première et deuxième positions en pivotement du couvercle 3 relativement au support 4. Le support 4 est préférentiellement attaché au couvercle 3 de manière permanente, afin de former un sous-ensemble unitaire comprenant au moins lesdits support 4 et couvercle 3. Avantageusement, le support 4 comprend, comme illustré aux figures, une traverse, c'est-à-dire d'une pièce sensiblement allongée qui s'étend diamétralement sur le couvercle 3 et qui se prolonge en l'espèce à chacune de ses extrémités par des bords tombants respectifs 4A, 4B. De préférence, la traverse en question comporte une zone centrale avantageusement pourvue d'un orifice central dans lequel est destiné à être enfilé un axe 8 fixé sur le couvercle 3, au centre de ce dernier, et autour duquel le support 4 est destiné à tourner relativement au couvercle 3 selon l'axe vertical central X-X'. L'axe 8 est par exemple soudé sur le couvercle 3 de façon à s'élever verticalement à partir du centre de ce dernier, et ainsi à pouvoir être inséré dans ledit orifice. Avantageusement, le support 4 comprend, outre la pièce en forme de traverse illustrée à la figure 1, une platine 9 destinée à être interposée entre la traverse et la face supérieure du couvercle 3 pour former avec la traverse un boîtier destiné à accueillir au moins en partie ledit dispositif de liaison cinématique. La traverse est fixée (par exemple au moyen de plusieurs vis) de manière permanente à la platine 9, afin de former avec cette dernière un sous-ensemble unitaire, monobloc, maintenu sur le couvercle 3 par des moyens d'accouplement autorisant le pivotement du couvercle 3 relativement au sous-ensemble précité formant avantageusement le support 4. De préférence, le couvercle 3 est conçu pour pivoter relativement au support 4 entre une position de verrouillage et une position de déverrouillage séparées par une course angulaire prédéterminée correspondant à la course angulaire requise pour faire passer l'appareil 1 de sa configuration de pré-verrouillage (configuration d'attente de verrouillage) à sa configuration de verrouillage et inversement. Le dispositif de liaison cinématique permet donc de convertir le mouvement de l'organe de commande manuelle 6 (qui est par exemple un mouvement de rotation selon l'axe Y-Y') relativement au support 4 en mouvement rotatif du couvercle 3 relativement à ce même support 4, en l'espèce selon l'axe vertical central X-X', de sorte que l'utilisateur peut ainsi commander le verrouillage/déverrouillage par pivotement du couvercle 3 relativement au support 4 au moyen d'une simple manipulation de l'organe de commande 6. Bien entendu, le dispositif de liaison cinématique susvisée est conçu en fonction de la nature du déplacement de l'organe de commande 6 relativement au support 4, et pourra mettre en oeuvre tout composant d'entraînement (roue dentée, came, levier, biellette, *etc*.) requis. Avantageusement, les support 4 et cuve 2 sont conçus pour interagir directement ou indirectement, lorsque le couvercle 3 est associé à la cuve 2 pour former l'enceinte de cuisson (comme illustré en particulier à la figure 1), afin de sensiblement empêcher le support 4 de pouvoir pivoter relativement à la cuve 2 selon ledit axe vertical central X-X' lors dudit déplacement manuel de l'organe de commande 6.

En d'autres termes, l'association du couvercle 3 et de la cuve 2 dans la configuration de pré-verrouillage illustrée à la figure 1 entraîne un inter-verrouillage angulaire, dans un plan horizontal, du support 4 et de la cuve 2 empêchant le support 4 de tourner selon l'axe X-X' tout en reposant sur la cuve 2. Ce verrouillage de la position angulaire relative du support 4 et de la cuve 2 permet au support 4 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 7) et inversement. De préférence, lesdits support 4 et cuve 2 sont pourvus à cet effet respectivement de conformations de support et de cuve complémentaires destinées à coopérer, par exemple par emboîtement, lorsque le couvercle 3 est associé à la cuve 2 pour former l'enceinte de cuisson (figure 1), ledit emboîtement des conformations complémentaires de support et de cuve permettant de verrouiller la position angulaire relative du support 4 et de la cuve 2 dans un plan horizontal perpendiculaire audit axe vertical central X-X'. Dans le mode de réalisation illustré aux figures, la cuve 2 est pourvue de deux conformations mâles de cuve disposées de façon diamétralement opposée relativement à l'axe vertical central X-X' et portées par exemple respectivement par les poignées de cuve 2C, 2D, tandis que le support 4 comporte deux conformations de support femelles complémentaires disposées de façon diamétralement opposée sur le couvercle 3 relativement à l'axe vertical central X-X', lesdites conformations de supports étant par exemple respectivement portées par les bords tombants 4A, 4B. L'invention n'est bien entendu pas limitée à la mise en oeuvre de telles conformations mâle et femelle et peut mettre en oeuvre tous types d'éléments d'inter-verrouillage de quelque nature que ce soit, reposant par exemple sur la mise en oeuvre d'une coopération de force (par friction, clipsage, engrènement, attraction magnétique...) suffisante pour verrouiller la position angulaire relative du support 4 de la cuve 2 dans un plan horizontal.

Avantageusement, le moyen de sécurité 7 est conçu pour accoupler lesdits couvercle 3 et support 4 lorsqu'il occupe sa position active, de façon à empêcher la rotation du couvercle 3 relativement au support 4. À cette fin, le moyen de sécurité 7 comprend un élément mobile, formé par exemple par ledit doigt de sécurité 7A, lequel est avantageusement monté à coulissement sur le couvercle 3, et par exemple à coulissement vertical selon une direction de coulissement parallèle à l'axe vertical central X-X', entre la position haute précitée dans laquelle il est capable de coopérer avec un élément complémentaire de blocage 40 qui fait partie du support 4 (ou est porté par ce dernier), afin de bloquer le pivotement du couvercle 3 relativement au support 4, et une position basse de rappel dans laquelle le doigt 7A n'interfère pas avec l'élément complémentaire 40, autorisant ainsi le pivotement du couvercle 3 relativement au support 4. L'élément complémentaire 40 est par exemple formé par une pièce présentant une butée d'arrêt 40A et un orifice de passage 40B. Tant que le couvercle 3 se trouve dans sa position de déverrouillage, la butée d'arrêt 40A se trouve au droit du doigt de sécurité 7A, sur la trajectoire de coulissement de ce dernier, afin de l'empêcher d'atteindre sa position haute et maintenir ainsi une mise en communication de l'intérieur de l'enceinte de cuisson avec l'extérieur empêchant toute montée en pression significative de l'enceinte, la position basse étant une position de fuite. Au contraire, lorsque le couvercle 3 atteint sa position de verrouillage, par pivotement relativement au support 4 selon la course angulaire prédéterminée évoquée précédemment, le doigt de sécurité 7A se retrouve alors au droit de l'ouverture 40B, ce qui autorise le doigt de sécurité 7A à atteindre, par exemple sous l'effet de la force motrice exercée par la montée en pression au sein de l'enceinte de cuisson, sa position haute d'étanchéité, dans laquelle il est maintenu sous l'effet du niveau de pression régnant dans l'enceinte. Une fois en position haute, le doigt de sécurité 7A est entouré par le bord de l'orifice 40B, ce qui empêche tout pivotement du couvercle 3 relativement au support 4 dans le sens du déverrouillage.

L'appareil 1 comprend également un moyen d'embrayage/débrayage autorisant, lorsque le moyen de sécurité 7 occupe sa position active, l'organe de commande manuelle 6 à passer de sa première à sa deuxième position (lesquelles correspondent en l'espèce respectivement au verrouillage et au déverrouillage) sans entraîner le déverrouillage du couvercle 3 relativement à la cuve 2. Dans le mode de réalisation illustré aux figures, le moyen d'embrayage/débrayage confère ainsi un caractère débrayable à l'organe de commande 6 qui autorise à l'utilisateur, alors même que le moyen de sécurité à l'ouverture 7 occupe sa position active interdisant tout déverrouillage du couvercle 3, à déplacer l'anse 6A de sa position rabattue à sa position déployée sans pour autant que cela ne commande le déverrouillage du couvercle 3. Grâce à cette mesure technique, l'utilisateur pourra amener l'organe de commande 6 jusque dans sa deuxième position et ce alors même que le niveau de pression régnant dans l'enceinte de cuisson interdit, par l'intermédiaire du moyen de sécurité à l'ouverture 7, un tel déverrouillage. De préférence, le moyen d'embrayage/débrayage permet de débrayer automatiquement l'organe de commande 6, c'est-à-dire sans intervention distincte et positive de l'utilisateur, autre qu'une tentative de déverrouillage du couvercle 3 alors que le niveau de pression dans l'appareil 1 est encore trop élevé (c'est-à-dire supérieur au niveau prédéterminé de sécurité).

Comme illustré aux figures, le dispositif de liaison cinématique reliant le mécanisme de verrouillage/déverrouillage à l'organe de commande manuelle 6 inclut avantageusement ledit moyen d'embrayage/débrayage. Ce dernier comprend au moins une pièce motrice 10 mobile selon une première trajectoire inscrite dans un premier plan P1. En d'autres termes, la pièce motrice 10 est conçue pour se déplacer relativement au couvercle 3 de telle sorte que le déplacement en question, qui peut être un déplacement en translation et/ou en rotation, s'inscrit dans le premier plan P1. De préférence, comme illustré aux figures, le premier plan P1 est un plan horizontal, qui s'étend sensiblement perpendiculairement à l'axe vertical central X-X'. Le moyen d'embrayage/débrayage comprend également au moins une pièce réceptrice 11 mobile selon une deuxième trajectoire inscrite dans un deuxième plan P2, c'est-à-dire que la pièce réceptrice 11 peut se déplacer, par exemple à rotation et/ou à coulissement, relativement au couvercle 3, de telle sorte que ledit déplacement s'inscrit dans le deuxième plan P2. Lesdits premiers et deuxième plan P1, P2 sont parallèles et situés l'un au-dessus de l'autre, c'est-à-dire que soit le premier plan P1 est disposé au-dessus du deuxième plan P2, comme dans l'exemple illustré aux figures, soit le premier plan P1 est disposé en dessous du deuxième plan P2 conformément à une variante alternative (non illustrée) de l'invention. Dans le mode de réalisation illustré aux figures, la pièce motrice 10 est située ainsi au-dessus de la pièce réceptrice 11, lesdites pièces motrice 10 et réceptrice 11 étant capables de se déplacer l'une par rapport à l'autre. Dans l'exemple illustré aux figures, lesdites pièces motrice 10 et réceptrice 11 sont ainsi montées sur le couvercle 3 à coulissement, parallèlement auxdits premier et deuxième plans P1, P2. De préférence, comme illustré aux figures, la pièce motrice 10 est conçue pour se déplacer à coulissement selon une trajectoire rectiligne parallèle à un axe transversal Z-Z' qui est perpendiculaire à la fois à l'axe vertical centra! X-X' ainsi qu'à l'axe Y-Y' de rotation de l'organe de commande manuelle 6. Avantageusement, la pièce réceptrice 11 est également mobile à coulissement relativement au couvercle 3 selon une deuxième trajectoire sensiblement rectiligne et parallèle elle aussi à l'axe transversal Z-Z', la pièce motrice 10 étant avantageusement disposée au-dessus de la pièce réceptrice 11. Avantageusement, lesdites pièces motrice 10 et réceptrice 11 sont emboîtées, pour que ladite pièce motrice 10 soit guidée à coulissement par ladite pièce réceptrice 11. Par exemple, la pièce motrice 10 coiffe au moins en partie la pièce réceptrice 11, comme illustré aux figures. Une telle conception, qui met en oeuvre un nombre minimal de pièces, s'avère être particulièrement compacte et fiable. Dans l'exemple illustré aux figures, la pièce motrice 10 présente ainsi un profil sensiblement en forme de U renversé, avec une âme 10A qui s'étend sensiblement parallèlement auxdits premier et deuxième plans P1, P2, c'est-à-dire en l'espèce de façon sensiblement horizontale, ladite âme 10A étant prolongée sur chacun de ses côtés latéraux par des bords tombants verticaux 10B, 10C parallèles entre eux et à l'axe vertical central X-X'. La pièce réceptrice 11 présente quant à elle une forme sensiblement conjuguée, avec d'une part un fond 11A qui s'étend sensiblement parallèlement aux premier et deuxième plans P1, P2, et donc parallèlement à l'âme 10A de la pièce motrice 10, selon un plan horizontal, et avec d'autre part des bords latéraux verticaux 11B, 11C qui s'élèvent verticalement de chaque côté du fond 11A. Lesdits bords latéraux 11B, 11C de la pièce réceptrice 11 sont de préférence disposés entre les bords tombants 10B, 10C de la pièce motrice 10, comme illustré aux figures, de façon que la coopération des bords latéraux 11B, 11C avec les bords tombants 10B, 10C permette un guidage en translation relatif des pièces motrice 10 et réceptrice 11.

Avantageusement, la pièce motrice 10 est en liaison cinématique avec l'organe de commande manuelle 6, de façon à être entraînée en déplacement par ledit organe de commande manuelle 6. Le déplacement de la pièce motrice 10 est donc avantageusement directement régi par le déplacement de l'organe de commande 6, c'est-à-dire que ladite liaison cinématique susvisée permet de transformer le déplacement de l'organe de commande manuelle 6 (qui est avantageusement une rotation selon l'axe Y-Y', lequel est sensiblement parallèle auxdits premier et deuxième plans P1, P2) en déplacement de la pièce motrice 10 (qui est avantageusement un déplacement à coulissement rectiligne selon l'axe transversal Z-Z'). Dans l'exemple illustré aux figures, ladite liaison cinématique entre l'organe de commande manuelle 6 et la pièce motrice 10 met en oeuvre une came 60, 61 solidaire de l'organe de commande 6. Ladite came 60, 61 est avantageusement pourvue d'un pion 60A, 61A qui est reçu, de préférence à pivotement, dans un logement correspondant 600, 601 ménagé dans la pièce motrice 10, de façon que la rotation de l'organe de commande manuelle 6 entraîne le pivotement concomitant de la came 60, 61, laquelle repousse alors, par coopération du pion 60A, 60B et des bords du logement correspondant 600, 601, la pièce motrice 10 dans un plan horizontal perpendiculaire à l'axe vertical central X-X'. L'invention n'est cependant absolument pas limitée à un mécanisme de transformation de mouvement à came, et il est parfaitement envisageable de recourir à tout autre mécanisme de transformation ou de transmission de mouvement connu sans pour autant que l'on sorte du cadre de l'invention. Par exemple, à titre alternatif, la liaison cinématique peut mettre en oeuvre un mécanisme à engrenage reposant sur la coopération d'un secteur de couronne dentée solidaire de l'organe de commande manuelle 6 et d'une crémaillère rectiligne solidaire de la pièce motrice 10. D'autres mécanismes (par exemple à biellette, à vis sans fin, à engrenage, *etc*.) sont bien évidemment envisageables, sans pour autant que l'on sorte du cadre de l'invention. Il est également envisageable que la liaison cinématique soit une simple liaison encastrement, auquel cas la pièce motrice 10 est immobilisée relativement à l'organe de commande manuelle 6. Par exemple, dans ce dernier cas de figure, l'organe de commande manuelle 6 se présente sous la forme d'une poignée ou d'un bouton rotatif selon l'axe vertical central X-X' et qui est fixé à la pièce motrice 10 de façon à entraîner directement cette dernière en rotation, elle aussi autour de l'axe X-X', dans le premier plan P1.

Le moyen d'embrayage/débrayage comprend également un connecteur mobile 12, 13 qui assure l'accouplement desdites pièce motrice 10 et réceptrice 11 de façon à les immobiliser l'une par rapport à l'autre, au moins selon une direction parallèle auxdits premier et deuxième plans P1, P2, pour qu'elles forment ainsi un sous-ensemble 14 mobile relativement au couvercle 3. Le connecteur 12, 13 assure ainsi une liaison sensiblement rigide entre les pièces motrice 10 et réceptrice 11, de façon que le déplacement de la pièce motrice 10 (sous l'effet en l'espèce du déplacement de l'organe de commande manuelle 6) relativement au couvercle 3 entraîne concomitamment le déplacement de la pièce réceptrice 11, lesdites pièces motrice 10 et réceptrice 11 se déplaçant ainsi de concert et formant de ce point de vue une pièce monobloc. Le connecteur 12, 13 permet ainsi, lorsque le moyen de sécurité 7 n'occupe pas sa position active, de faire en sorte qu'un déplacement de l'organe de commande manuelle 6 de sa première vers sa deuxième position entraîne un déplacement global du sous-ensemble 14 formé par les pièces motrice 10 et réceptrice 11 reliées par le connecteur 12, 13. Ledit sous-ensemble 14 commande lui-même avantageusement le déverrouillage, en entraînant par exemple le déplacement de mâchoires relativement au couvercle 3 (variante non illustrée), ou en entraînant, conformément au mode de réalisation illustré aux figures, le déplacement du couvercle 3 relativement au support 4 de façon à faire passer l'appareil 1 de sa configuration de verrouillage (figure 7) à sa configuration de déverrouillage, par rotation du couvercle 3 relativement au support 4. Dans l'exemple illustré aux figures, la pièce réceptrice 11 est reliée au couvercle 3 de façon que le coulissement de la pièce réceptrice 11 selon l'axe transversal Z-Z' entraîne la rotation du couvercle 3 relativement au support 4. La liaison cinématique entre la pièce réceptrice 11 et le couvercle 3 repose par exemple sur la mise en oeuvre d'un levier horizontal 15 monté à pivotement relativement au support 4 selon un axe vertical excentré W-W' qui est fixe par rapport audit support 4, parallèle audit axe vertical central X-X' et situé à une distance prédéterminée de ce dernier. De préférence, comme illustré aux figures, ledit levier horizontal 15 s'étend longitudinalement entre une première extrémité 15A articulée au couvercle 3 et une deuxième extrémité 15B articulée à la pièce réceptrice 11. Par exemple, le levier horizontal 15 est pourvu d'un logement (formé par exemple par un orifice traversant) destiné à accueillir un axe 16 solidaire du support 4, et par exemple issu de la platine 9, de façon à réaliser une liaison pivot d'axe W-W' entre le levier horizontal 15 et le support 4. De préférence, ledit levier horizontal 15 est monté à pivotement relativement au support 4 en un point de pivotement situé entre lesdites première extrémité 15A et deuxième extrémité 15B, de sorte que l'axe vertical excentré W-W' passe par une zone du levier horizontal 15 qui est située à distance à la fois de la première et de la deuxième extrémité 15A, 15 B. L'articulation de la première extrémité 15A relativement au couvercle 3 est par exemple réalisée au moyen d'un premier goujon 30 qui est solidaire du couvercle 3, et qui est par exemple soudé sur la face externe de ce dernier, de manière à s'élever verticalement à partir et au droit du couvercle 3. Ledit goujon 30 est avantageusement reçu dans une gorge correspondante ménagée à la première extrémité 15A du levier 15, de sorte que ledit premier goujon 30 peut à la fois coulisser et tourner dans la gorge en question. L'entraînement en rotation autours de l'axe W-W' du levier 15 par la pièce réceptrice 11 est quant à lui avantageusement réalisé au moyen d'un deuxième goujon 100 solidaire en l'espèce de la pièce réceptrice 11, et embarqué sur cette dernière. Ledit deuxième goujon 100 est avantageusement reçu dans une gorge complémentaire ménagée à la deuxième extrémité 15B du levier horizontal 15, de façon que ledit deuxième goujon 100 puisse à la fois coulisser et pivoter dans la gorge en question. Le déplacement en translation rectiligne de la pièce réceptrice 11 dans le plan horizontal P2 est ainsi converti en rotation du levier 15 autour de l'axe vertical excentré W-W', rotation qui est elle-même convertie en rotation du couvercle 3 relativement au support 4 selon l'axe vertical central X-X'. L'invention n'est cependant absolument pas limitée à un tel mécanisme de transformation de mouvement, et il est par exemple parfaitement envisageable de mettre en oeuvre, en lieu et place d'un système à levier comme illustré, un système à biellette, à came ou à engrenage, ou tout autre système de transformation ou de transmission de mouvement connu, sans pour autant que l'on sorte du cadre de l'invention. Il est également parfaitement envisageable de mettre en oeuvre, en lieu et place d'un organe de commande manuelle 6 pivotant, un organe de commande 6 qui soit coulissant et qui se présente par exemple sous la forme d'un bouton-poussoir solidaire de la pièce motrice 10, de sorte qu'il suffit dans ce cas de pousser sur le bouton en question pour faire coulisser radialement la pièce motrice 10 et provoquer ainsi le pivotement du couvercle 3 relativement au support 4 par l'intermédiaire du levier horizontal 15. À titre alternatif, il est par ailleurs parfaitement envisageable que la pièce réceptrice 11 serve à commander le déplacement non pas du couvercle 3 dans le cadre d'un système à baïonnette, mais par exemple le déplacement de mâchoires de verrouillage relativement au couvercle 3. L'invention n'est donc pas limitée à la mise en oeuvre d'un système de verrouillage spécifique.

Le moyen d'embrayage/débrayage est par ailleurs configuré pour désaccoupler lesdites pièces motrice 10 et réceptrice 11 par déplacement dudit connecteur mobile 12, 13 selon une direction D sécante à ladite première trajectoire, en réponse à l'exercice d'un effort d'entraînement de l'organe de commande manuel 6 de sa première vers sa deuxième position alors que le moyen de sécurité 7 occupe sa position active, afin de permettre un déplacement relatif desdites pièces motrice 10 et réceptrice 11 ainsi désaccouplées. En d'autres termes, le connecteur 12, 13 est monté mobile relativement aux pièces motrice 10 et réceptrice 11 de façon à pouvoir se déplacer selon une trajectoire qui coupe au moins la première trajectoire de la pièce motrice 10, c'est-à-dire qui n'est pas parallèle à ladite première trajectoire. Le recours à une telle conception, basée en particulier sur la mise en oeuvre de deux pièces 10, 11 mobiles l'une au-dessus de l'autre dans des plans parallèles horizontaux P1, P2, et qui sont accouplées ou désaccouplées par un connecteur capable d'interférer avec la trajectoire de la pièce motrice 10 selon une direction non parallèle à ladite trajectoire, permet d'obtenir un mécanisme d'embrayage/débrayage particulièrement compact, léger, simple et fiable, qui se prête en outre à une multitude de variantes de conception de l'organe de commande manuel 6, lequel peut être rotatif et/ou coulissant selon différents axes. Le fait que le connecteur 12, 13 se déplace entre des positions d'accouplement et de désaccouplement selon une direction qui croise la trajectoire de la pièce motrice 10 entraînée en déplacement par l'organe de commande manuel 6 permet d'opérer une déconnexion cinématique complète de l'organe de commande manuel 6 et de la pièce réceptrice 11, sans qu'aucun effort de retour élastique ne puisse notamment venir s'exercer sur l'organe de commande manuel 6. Avantageusement, ledit moyen d'embrayage/débrayage est configuré pour désaccoupler lesdites pièces motrice 10 et réceptrice 11 par déplacement dudit connecteur mobile 12, 13 selon une direction D sensiblement perpendiculaire auxdits premier et deuxième plans P1, P2, conformément au mode de réalisation illustré aux figures. Selon cette conception préférentielle, la direction D de déplacement du connecteur 12, 13 est sensiblement parallèle à l'axe vertical central X-X' et croise lesdits plans P1, P2. Avantageusement, le connecteur 12, 13 est conçu pour coulisser selon la direction D entre une position embrayée dans laquelle il relie les pièces motrice 10 et réceptrice 11, de façon que ces dernières forment ledit sous-ensemble 14 monobloc, et une position débrayée dans laquelle il supprime la liaison cinématique entre la pièce motrice 10 et la pièce réceptrice 11, de façon à permettre le coulissement libre de la pièce motrice 10 relativement à la pièce réceptrice 11, laquelle n'est alors plus entraînée en déplacement par la pièce motrice 10. Avantageusement, lesdites pièces motrice 10 et réceptrice 11 sont respectivement pourvues d'un premier logement 17A, 17B et d'un deuxième logement 18A,18B, le connecteur 12, 13 mobile étant interposé entre lesdites pièces motrice 10 et réceptrice 11 et s'étendant longitudinalement, en l'espèce selon la direction D, entre une première extrémité 12A, 13A et une deuxième extrémité 12B, 13B opposées conçues pour être reçues respectivement dans lesdits premier et deuxième logements 17A, 17B, 18A,18B afin d'accoupler lesdites pièces motrice 10 et réceptrice 11. Dans ce mode de réalisation avantageux, le connecteur 12, 13 est préférentiellement conçu pour se déplacer entre d'une part une position embrayée de rappel, qui est de préférence une position embrayée de rappel élastique, dans laquelle lesdites première et deuxième extrémités 12A, 13A sont reçues respectivement dans lesdits premier et deuxième logements 17A, 17B, 18A, 18B afin d'accoupler lesdites pièces motrice 10 et réceptrice 11, et d'autre part une position débrayée dans laquelle ladite deuxième extrémité 12B, 13B est reçue dans ledit deuxième logement 18A, 18B tandis que ladite première extrémité 12A, 13A se trouve hors dudit premier logement 17A, 17B, de sorte que les pièces motrice 10 et réceptrice 11 sont désaccouplées, ce qui correspond à une configuration débrayée de l'organe de commande 6. Avantageusement, le connecteur mobile 12, 13 est conçu pour être rappelé en position embrayée par un ressort de compression 120, 130 interposé entre la pièce réceptrice 11 et le connecteur mobile 12, 13. Le ressort de compression 120, 130 repousse ainsi en permanence le connecteur 12, 13 dans une position embrayée haute dans laquelle la première extrémité 12A, 13A du connecteur 12, 13 est reçue dans le premier logement correspondant 17A, 17B, lequel est par exemple formé par une lumière ménagée dans la pièce motrice 10, par exemple dans l'âme 10A de cette dernière. Le connecteur mobile 12, 13 est avantageusement conçu pour être repoussé dans sa position débrayée par la pièce motrice 10 elle-même, laquelle est conçue pour se déplacer relativement à la pièce réceptrice 11 en réponse à l'exercice d'un effort d'entraînement de l'organe de commande manuelle 6 de sa première vers sa deuxième position alors que le moyen de sécurité 7 occupe sa position active. À cette fin, la première extrémité 12A, 13A du connecteur 12, 13 présente avantageusement une forme inclinée, de façon que par effet de came le connecteur 12, 13 puissent s'effacer sous l'effet du coulissement de la pièce motrice 10 en réponse à une sollicitation de déverrouillage exercée sur l'organe de commande manuelle 6. Une fois le connecteur 12, 13 ainsi repoussé vers le bas, à l'encontre de la force de rappel du ressort correspondant 120, 130, dans sa position débrayée, la pièce motrice 10 peut coulisser librement selon l'axe transversal Z-Z', tandis que l'organe de commande manuelle 6 peut pivoter librement autour de l'axe Y-Y' entre ses positions de verrouillage et de déverrouillage, laquelle peut coulisser librement sans être soumise un quelconque effort de rappel s'exerçant selon sa trajectoire. L'invention permet ainsi de mettre en oeuvre de manière particulièrement simple, compacte et bon marché une fonction de débrayage qui peut être utilisée dans de multiples configurations, indépendamment de la forme et du fonctionnement de l'organe de commande manuelle 6. La conception retenue dans le cadre du mode de réalisation illustré aux figures permet en outre de régler de façon fine et précise les efforts mis en jeu (en l'espèce par effet de came) pour le débrayage, par ajustement du tarage des ressorts 120, 130 et/ou ajustement de l'inclinaison de la première extrémité 12A, 13A.

## Revendications

1. Appareil (1) de cuisson d'aliments sous pression comprenant :
- une cuve (2) et un couvercle (3) qui peut être verrouillé et déverrouillé relativement à la cuve (2),
- un moyen de sécurité (7) susceptible d'occuper une position active dans laquelle il empêche le déverrouillage du couvercle (3),
- un organe de commande manuelle (6) du verrouillage et déverrouillage du couvercle (2), ledit organe de commande manuelle (6) étant mobile entre une première et une deuxième position et conçu pour que, lorsque le moyen de sécurité (7) n'occupe pas sa position active, le passage dudit organe de commande manuelle (6) de sa première à sa deuxième position entraîne le déverrouillage du couvercle (3),
- un moyen d'embrayage/débrayage autorisant, lorsque le moyen de sécurité (7) occupe sa position active, l'organe de commande manuelle (6) à passer de sa première à sa deuxième position sans entraîner le déverrouillage du couvercle (3),
le moyen d'embrayage/débrayage comprenant au moins une pièce motrice (10) mobile selon une première trajectoire inscrite dans un premier plan (P1) et une pièce réceptrice (11) mobile selon une deuxième trajectoire inscrite dans un deuxième plan (P2), lesdits premier et deuxième plans (P1, P2) étant parallèles et situés l'un au-dessus de l'autre, **caractérisé en ce que** ledit moyen d'embrayage/débrayage comprend également un connecteur (12, 13) mobile qui assure l'accouplement desdites pièces motrice (10) et réceptrice (11) de façon à les immobiliser l'une par rapport à l'autre pour qu'elles forment ainsi un sous-ensemble (14) mobile relativement au couvercle (3), ledit moyen d'embrayage/débrayage étant configuré pour désaccoupler lesdites pièces motrice (10) et réceptrice (11) par déplacement dudit connecteur (12, 13) mobile selon une direction (D) sécante à ladite première trajectoire, en réponse à l'exercice d'un effort d'entraînement de l'organe de commande manuelle (6) de sa première vers sa deuxième position alors que le moyen de sécurité (7) occupe sa position active, afin de permettre un déplacement relatif desdites pièces motrice (10) et réceptrice (11) ainsi désaccouplées.

2. Appareil (1) selon la revendication 1 **caractérisé en ce que** ledit moyen de sécurité à l'ouverture (7) comprend un doigt de sécurité (7A) monté à coulissement vertical relativement au couvercle (3) entre une position haute correspondant à ladite position active et une position basse de rappel, ledit doigt de sécurité (7A) étant conçu pour être maintenu en position haute lorsque la pression régnant au sein de l'appareil (1) atteint un niveau prédéterminé.

3. Appareil (1) selon la revendication 1 ou 2 **caractérisé en ce que** ledit organe de commande manuelle (6) est monté mobile à rotation sur le couvercle (3), de préférence selon un axe (Y-Y') sensiblement parallèle auxdits premier et deuxième plans, entre lesdites première et deuxième positions, ledit organe de commande manuelle (6) étant de préférence formé par un levier, une anse (6A) ou un bouton.

4. Appareil (1) selon l'une quelconque des revendications 1 à 3 **caractérisé en ce qu'**il comprend un mécanisme de verrouillage/déverrouillage du couvercle (3) relativement à la cuve (2), ledit mécanisme de verrouillage/déverrouillage étant relié fonctionnellement à l'organe de commande manuelle (6) par l'intermédiaire d'un dispositif de liaison cinématique qui inclut ledit moyen d'embrayage/débrayage.

5. Appareil (1) selon la revendication 4 **caractérisé en ce que** le mécanisme de verrouillage/déverrouillage comprend un système à baïonnette conçu pour assurer le verrouillage et le déverrouillage du couvercle (3) relativement à la cuve (2) par pivotement du couvercle (3) relativement à la cuve (2), ledit mécanisme de verrouillage/déverrouillage comprenant également un support (4) auquel ledit couvercle (3) est attaché, ledit dispositif de liaison cinématique étant conçu pour transformer le déplacement de l'organe de commande (6) entre ses première et deuxième positions en pivotement du couvercle (3) relativement audit support (4).

6. Appareil (1) selon la revendication 5 **caractérisé en ce que** ledit moyen de sécurité (7) est conçu pour accoupler lesdits couvercle (3) et support (4) lorsqu'il occupe sa position active, de façon à empêcher la rotation du couvercle relativement au support (4).

7. Appareil (1) selon l'une quelconque des revendications 1 à 6 **caractérisé en ce que** lesdites pièces motrice et réceptrice (10, 11) sont montées sur le couvercle (3) à coulissement parallèlement auxdits premier et deuxième plans (P1, P2).

8. Appareil (1) selon la revendication 7 **caractérisé en ce que** lesdites pièces motrice (10) et réceptrice (11) sont emboîtées pour que ladite pièce motrice (10) soit guidée à coulissement par ladite pièce réceptrice (11).

9. Appareil (1) selon l'une des revendications 1 à 8 **caractérisé en ce que** la pièce motrice (10) coiffe au moins en partie la pièce réceptrice (11).

10. Appareil (1) selon l'une quelconque des revendications 1 à 9 **caractérisé en ce que** ledit moyen d'embrayage/débrayage est configuré pour désaccoupler lesdites pièces motrice (10) et réceptrice (11) par déplacement dudit connecteur mobile (12, 13) selon une direction (D) sensiblement perpendiculaire auxdits premier et deuxième plans (P1, P2).

11. Appareil (1) selon l'une quelconque des revendications 1 à 10 **caractérisé en ce que** lesdites pièce motrice (10) et réceptrice (11) sont respectivement pourvues d'un premier et d'un deuxième logement (17A, 17B, 18A, 18B), ledit connecteur mobile étant interposé entre lesdites pièces motrice (10) et réceptrice (11) et s'étendant longitudinalement entre une première extrémité (12A, 13A) et une deuxième extrémité (12B, 13B) opposées conçues pour être reçues respectivement dans lesdits premier et deuxième logements afin d'accoupler lesdites pièces motrice (10) et réceptrice (11).

12. Appareil (1) selon la revendication 11 **caractérisé en ce que** ledit connecteur (12, 13) est conçu pour se déplacer entre une position embrayée de rappel, dans laquelle lesdites première et deuxième extrémités (12A, 13A) sont reçues respectivement dans lesdits premier et deuxième logements (17A, 17B, 18A 18B) afin d'accoupler lesdites pièces motrice (10) et réceptrice (11), et une position débrayée dans laquelle ladite deuxième extrémité (12B, 13B) est reçue dans ledit deuxième logement (18A, 18B) tandis que ladite première extrémité (12A, 13A) se trouve hors dudit premier logement (17A, 17B), de sorte que lesdites pièces motrice (10) et réceptrice (11) sont désaccouplées.

13. Appareil (1) selon la revendication 12 **caractérisé en ce que** ledit connecteur (12, 13) mobile est conçu pour être repoussé dans sa position débrayée par la pièce motrice (10), laquelle est conçue pour se déplacer relativement à la pièce réceptrice (11) en réponse à l'exercice d'un effort d'entraînement de l'organe de commande manuelle (6) de sa première vers sa deuxième position alors que le moyen de sécurité (7) occupe sa position active.

14. Appareil (1) selon l'une quelconque des revendications 12 et 13 **caractérisé en ce que** ledit connecteur (12, 13) mobile est conçu pour être rappelé en position embrayée par un ressort de compression (120, 130) interposé entre la pièce réceptrice (11) et ledit connecteur (12, 13) mobile.

15. Appareil (1) selon l'une des revendications 1 à 14 **caractérisé en ce que** ladite pièce motrice (10) est en liaison cinématique avec l'organe de commande manuelle (6) de façon à être entraînée en déplacement par ledit organe de commande manuelle (6).

## Patentansprüche

1. Vorrichtung (1) zum Kochen von Lebensmitteln unter Druck, umfassend:
- einen Behälter (2) und einen Deckel (3), der in Bezug auf den Behälter (2) ver- und entriegelt werden kann,
- ein Sicherheitsmittel (7), das imstande ist, eine aktive Position einzunehmen, in der es die Entriegelung des Deckels (3) verhindert,
- ein manuelles Bedienelement (6) zum Ver- und Entriegeln des Deckels (2), wobei das manuelle Bedienelement (6) zwischen einer ersten und einer zweiten Position beweglich ist und dafür ausgelegt ist, dass, wenn das Sicherheitsmittel (7) seine aktive Position nicht einnimmt, der Übergang des manuellen Bedienelements (6) von seiner ersten in seine zweite Position das Entriegeln des Deckels (3) bewirkt,
- ein Einrück-/Ausrückmittel, das, wenn das Sicherheitsmittel (7) seine aktive Position einnimmt, dem manuellen Bedienelement (6) ermöglicht, von seiner ersten in seine zweite Position überzugehen, ohne die Entriegelung des Deckels (3) zu bewirken,
wobei das Einrück-/Ausrückmittel mindestens ein Antriebsteil (10) umfasst, das entlang eines ersten Wegs beweglich ist, der in einer ersten Ebene (P1) liegt, und ein Aufnahmeteil (11), das entlang eines zweiten Wegs beweglich ist, der in einer zweiten Ebene (P2) liegt, wobei die erste und die zweite Ebene (P1, P2) parallel und übereinander angeordnet sind, **dadurch gekennzeichnet, dass** das Einrück-/Ausrückmittel auch ein bewegliches Verbindungselement (12, 13) umfasst, das die Kopplung des Antriebsteils (10) und des Aufnahmeteils (11) sicherstellt, um das eine in Bezug auf das andere festzustellen, damit sie auf diese Weise eine Untereinheit (14) bilden, die in Bezug auf den Deckel (3) beweglich ist, wobei das Einrück-/Ausrückmittel dafür ausgelegt ist, als Reaktion auf das Ausüben einer Kraft, die das manuelle Bedienelement (6) von seiner ersten in seine zweite Position treibt, während das Sicherheitsmittel (7) seine aktive Position innehat, das Antriebsteil (10) und das Aufnahmeteil (11) zu entkoppeln, indem es das Verbindungselement (12, 13) in eine Richtung (D) bewegt, die den ersten Weg schneidet, um dem Antriebsteil (10) und dem Aufnahmeteil (11), die infolgedessen entkoppelt sind, eine relative Bewegung zu ermöglichen.

2. Vorrichtung (1) nach Anspruch 1, **dadurch gekennzeichnet, dass** das Sicherheitsmittel an der Öffnung (7) einen Sicherheitsstift (7A) umfasst, der in Bezug auf den Deckel (3) zwischen einer oberen Position, die der aktiven Position entspricht, und einer unteren Rückstellposition vertikal verschiebbar montiert ist, wobei der Sicherheitsstift (7A) dafür ausgelegt ist, in der oberen Position gehalten zu werden, wenn der im Innern der Vorrichtung (1) herrschende Druck ein vorbestimmtes Niveau erreicht.

3. Vorrichtung (1) nach Anspruch 1 oder 2, **dadurch gekennzeichnet, dass** das manuelle Bedienelement (6) drehbar beweglich auf dem Deckel (3), vorzugsweise entlang einer Achse (Y-Y'), die im Wesentlichen parallel zur ersten und zur zweiten Ebene ist, zwischen der ersten und der zweiten Position montiert ist, wobei das manuelle Bedienelement (6) vorzugsweise durch einen Hebel, einen Griff (6A) oder einen Knopf gebildet ist.

4. Vorrichtung (1) nach einem der Ansprüche 1 bis 3, **dadurch gekennzeichnet, dass** sie einen Mechanismus zum Verriegeln/Entriegeln des Deckels (3) in Bezug auf den Behälter (2) umfasst, wobei der Mechanismus zum Verriegeln/Entriegeln über eine kinematische Verbindungsvorrichtung, die das Einrück-/Ausrückmittel enthält, mit dem manuellen Bedienelement (6) in Wirkverbindung ist.

5. Vorrichtung (1) nach Anspruch 4, **dadurch gekennzeichnet, dass** der Mechanismus zum Verriegeln/Entriegeln ein Bajonettsystem umfasst, das dafür ausgelegt ist, das Verriegeln und das Entriegeln des Deckels (3) in Bezug auf den Behälter (2) durch Schwenken des Deckels (3) in Bezug auf den Behälter (2) sicherzustellen, wobei der Mechanismus zum Verriegeln/Entriegeln auch eine Halterung (4) umfasst, an welcher der Deckel (3) befestigt ist, wobei die kinematische Verbindungsvorrichtung dafür ausgelegt ist, die Bewegung des Bedienelements (6) zwischen seiner ersten und seiner zweiten Position in ein Schwenken des Deckels (3) in Bezug auf die Halterung (4) zu überführen.

6. Vorrichtung (1) nach Anspruch 5, **dadurch gekennzeichnet, dass** das Sicherheitsmittel (7) dafür ausgelegt ist, den Deckel (3) und die Halterung (4) zu koppeln, wenn es seine aktive Position einnimmt, sodass ein Drehen des Deckels in Bezug auf die Halterung (4) verhindert wird.

7. Vorrichtung (1) nach einem der Ansprüche 1 bis 6, **dadurch gekennzeichnet, dass** das Antriebsteil und das Aufnahmeteil (10, 11) parallel zur ersten und zur zweiten Ebene (P1, P2) verschiebbar auf dem Deckel (3) montiert sind.

8. Vorrichtung (1) nach Anspruch 7, **dadurch gekennzeichnet, dass** das Antriebsteil (10) und das Aufnahmeteil (11) ineinandergesteckt sind, damit das Antriebsteil (10) verschiebbar durch das Aufnahmeteil (11) geführt wird.

9. Vorrichtung (1) nach einem der Ansprüche 1 bis 8, **dadurch gekennzeichnet, dass** das Antriebsteil (10) das Aufnahmeteil (11) zumindest teilweise bedeckt.

10. Vorrichtung (1) nach einem der Ansprüche 1 bis 9, **dadurch gekennzeichnet, dass** das Einrück-/Ausrückmittel dafür ausgelegt ist, das Antriebsteil (10) und das Aufnahmeteil (11) durch Bewegen des beweglichen Verbindungselements (12, 13) in eine Richtung (D) im Wesentlichen senkrecht zur ersten und zur zweiten Ebene (P1, P2) zu entkoppeln.

11. Vorrichtung (1) nach einem der Ansprüche 1 bis 10, **dadurch gekennzeichnet, dass** das Antriebsteil (10) und das Aufnahmeteil (11) jeweils mit einem ersten und einem zweiten Aufnahmesitz (17A, 17B, 18A, 18B) versehen sind, wobei das bewegliche Verbindungselement zwischen dem Antriebsteil (10) und dem Aufnahmeteil (11) angeordnet ist und sich in Längsrichtung zwischen einem ersten Ende (12A, 13A) und einem gegenüberliegenden zweiten Ende (12B, 13B) erstreckt, die dafür ausgelegt sind, in dem ersten bzw. dem zweiten Aufnahmesitz aufgenommen zu werden, um das Antriebsteil (10) und das Aufnahmeteil (11) zu koppeln.

12. Vorrichtung (1) nach Anspruch 11, **dadurch gekennzeichnet, dass** das Verbindungselement (12, 13) dafür ausgelegt ist, sich zwischen einer eingerückten Rückstellposition, in der das erste und das zweite Ende (12A, 13A) im ersten bzw. zweiten Aufnahmesitz (17A, 17B, 18A, 18B) aufgenommen sind, um das Antriebsteil (10) und das Aufnahmeteil (11) zu koppeln, und einer ausgerückten Position, in der das zweite Ende (12B, 13B) im zweiten Aufnahmesitz (18A, 18B) aufgenommen ist, während sich das erste Ende (12A, 13A) außerhalb des ersten Aufnahmesitzes (17A, 17B) befindet, zu bewegen, sodass das Antriebsteil (10) und Aufnahmeteil (11) entkoppelt werden.

13. Vorrichtung (1) nach Anspruch 12, **dadurch gekennzeichnet, dass** das bewegliche Verbindungselement (12, 13) dafür ausgelegt ist, wieder in seine ausgerückte Position zurückgetrieben werden zu können und zwar durch das Antriebsteil (10), das dafür ausgelegt ist, sich als Reaktion auf das Ausüben einer Kraft, die das manuelle Bedienelement (6) von seiner ersten in seine zweite Position treibt, während das Sicherheitsmittel (7) seine aktive Position innehat, in Bezug auf das Aufnahmeteil (11) zu bewegen.

14. Vorrichtung (1) nach einem der Ansprüche 12 und 13, **dadurch gekennzeichnet, dass** das bewegliche Verbindungselement (12, 13) dafür ausgelegt ist, durch eine Druckfeder (120, 130), die zwischen dem Aufnahmeteil (11) und dem beweglichen Verbindungselement (12, 13) angeordnet ist, in die eingerückte Position zurückgestellt zu werden.

15. Vorrichtung (1) nach einem der Ansprüche 1 bis 14, **dadurch gekennzeichnet, dass** das Antriebsteil (10) in kinematischer Verbindung mit dem manuellen Bedienelement (6) ist, sodass es vom manuellen Bedienelement (6) zur Bewegung angetrieben wird.

## Claims

1. A utensil (1) for cooking food under pressure, said utensil comprising:
- a vessel (2) and a lid (3) that can be locked and unlocked relative to the vessel (2);
- safety means (7) suitable for taking up an active position in which they prevent the lid (3) from being unlocked;
- a manual control member (6) for manually controlling locking and unlocking of the lid (2), said manual control member (6) being mounted to move between a first position and a second position, and being designed so that, when the safety means (7) are not in their active position, the manual control member (6) going from its first position to its second position causes the lid (3) to be unlocked;
- clutch/declutch means that, when the safety means (7) are in their active position, allow the manual control member (6) to go from its first position to its second position without causing the lid (3) to be unlocked;
the clutch/declutch means comprising at least one driving part (10) mounted to move along a first path lying in a first plane (P1) and a driven part (11) mounted to move along a second path lying in a second plane (P2), said first and second planes (P1, P2) being parallel and situated one above the other, **characterized in that** said clutch/declutch means further comprises a moving connector (12, 13) that couples together said driving part (10) and said driven part (11) in such a manner as to prevent them from moving relative to each other so that they thus form a subassembly (14) mounted to move relative to the lid (3), said clutch/declutch means being configured to decouple said driving part (10) and said driven part (11) from each other by said moving connector (12, 13) moving in a direction (D) intersecting said first path, in response to a drive force being exerted to cause the manual control member (6) to go from its first position to its second position while the safety means (7) are in their active position, in order to enable said driving part (10) and said driven part (11) as decoupled to be moved relative to each other.

2. A utensil (1) according to claim 1, **characterized in that** said opening safety means (7) comprise a safety finger (7A) mounted to slide vertically relative to the lid (3) between a high position corresponding to said active position and a return low position, said safety finger (7A) being designed to be maintained in the high position when the pressure prevailing inside the utensil (1) reaches a predetermined level.

3. A utensil (1) according to claim 1 or claim 2, **characterized in that** said manual control member (6) is mounted to turn on the lid (3), preferably about an axis (Y-Y') substantially parallel to said first and second planes, to go between said first and second positions, said manual control member (6) being preferably formed by a lever, by a looped handle (6A), or by a knob.

4. A utensil (1) according to any one of claims 1 to 3, **characterized in that** it further comprises a locking/unlocking mechanism for locking/unlocking the lid (3) relative to the vessel (2), said locking/unlocking mechanism being connected functionally to the manual control member (6) via a linkage device that includes said clutch/declutch means.

5. A utensil (1) according to claim 4, **characterized in that** the locking/unlocking mechanism comprises a bayonet-fitting system designed to lock and unlock the lid (3) relative to the vessel (2) by turning the lid (3) relative to the vessel (2), said locking/unlocking mechanism further comprising a support (4) to which said lid (3) is attached, said linkage device being deigned to transform the movement of the control member (6) between its first and second positions into turning of the lid (3) relative to said support (4).

6. A utensil (1) according to claim 5, **characterized in that** said safety means (7) are designed to couple said lid (3) and said support (4) together when said safety means (7) are in their active position, in such a manner as to prevent the lid from turning relative to the support (4).

7. A utensil (1) according to any one of claims 1 to 6, **characterized in that** said driving and driven parts (10, 11) are mounted on the lid (3) to slide parallel to said first and second planes (P1, P2).

8. A utensil (1) according to claim 7, **characterized in that** said driving part (10) and said driven part (11) are in mutually interfitting engagement so that said driving part (10) is guided in sliding by said driven part (11).

9. A utensil (1) according to any one of claims 1 to 8, **characterized in that** the driving part (10) fits over the driven part (11) at least in part.

10. A utensil (1) according to any one of claims 1 to 9, **characterized in that** said clutch/declutch means are configured to decouple said driving part (10) and said driven part (11) from each other by said moving connector (12, 13) moving in a direction (D) substantially perpendicular to said first and second planes (P1, P2).

11. A utensil (1) according to any one of claims 1 to 10, **characterized in that** said driving part (10) and said driven part (11) are respectively provided with a first recess (17A, 17B) and with a second recess (18A, 18B), said moving connector being interposed between said driving part (10) and said driven part (11), and extending longitudinally between a first end (12A, 13A) and a second end (12B, 13B) that are opposite from each other and that are designed to be received in respective ones of the first and second recesses in order to couple together said driving part (10) and said driven part (11).

12. A utensil (1) according to claim 11, **characterized in that** said connector (12, 13) is designed to move between a return clutched position, in which said first and second ends (12A, 13A) are received in respective ones of said first and second recesses (17A, 17B, 18A, 18B) in order to couple said driving part (10) and said driven part (11) together, and a declutched position, in which said second end (12B,13B) is received in said second recess (18A, 18B) while said first end (12A, 13A) finds itself out of said first recess (17A, 17B), so that said driving part (10) and said driven part (11) are decoupled from each other.

13. A utensil (1) according to claim 12, **characterized in that** said moving connector (12, 13) is designed to be pushed away into its declutched position by the driving part (10), which is designed to move relative to the driven part (11) in response to a drive force being exerted to drive the manual control member (6) from its first position to its second position while the safety means (7) are in their active position.

14. A utensil (1) according to claim 14 or claim 15, **characterized in that** said moving connector (12, 13) is designed to be urged back into the clutched position by a compression spring (120, 130) interposed between the driven part (11) and said moving connector (12, 13).

15. A utensil (1) according to any one of claims 1 to 16, **characterized in that** said driving part (10) is drivingly linked by a linkage to the manual control member (6) in such a manner as to be driven to move by said manual control member (6).
